# FASCICULE DE BREVET EUROPEEN

(11) **EP 1 636 975 B1**
(45) Date de publication et mention de la délivrance du brevet: **06.08.2014**
(21) Numéro de dépôt: 04742883.4
(22) Date de dépôt: 04.06.2004
(51) Int. Cl.: H04M 3/493

(54) **TERMINAL ET SERVEUR POUR SYNCHRONISER DES DONNEES DE CONTACTS**
TERMINAL UND SERVER ZUM SYNCHRONISIEREN VON KONTAKTEN
TERMINAL AND SERVER FOR THE SYNCHRONISATION OF CONTACT DATA

(30) Priorité: 20.06.2003 FR 0307462
(43) Date de publication de la demande: 22.03.2006
(73) Titulaire: Thomson Licensing, 92130 Issy-les-Moulineaux (FR)
(72) Inventeur: SAMAMA, Thierry, F-75015 PARIS (FR)
(74) Mandataire: Huchet, Anne
(86) Numéro de dépôt international: PCT/FR2004/050217
(87) Numéro de publication internationale: WO 2004/114640

(56) Documents cités:
- EP-A2- 1 187 433
- WO-A-99/27721
- WO-A1-01/95649
- WO-A2-02/071219
- FR-A- 2 823 931

## Description

L'invention est relative à un système pour synchroniser des données de contacts, notamment des noms et des numéros de téléphone, entre des terminaux de types divers

Les carnets d'adresses ou carnets téléphoniques de type électronique sont maintenant d'usage courant tant dans le domaine privé que dans le domaine professionnel. En général, un utilisateur dispose de plusieurs bases de données de ce type : dans son ordinateur, sur son téléphone mobile, sur son téléphone fixe, et sur son agenda électronique ou assistant personnel. Il est bien entendu préférable qu'une modification opérée sur un carnet d'adresses sur l'un des terminaux puisse être répercutée de façon aisée sur les autres terminaux. Cette opération est en général appelée une synchronisation.

Cette synchronisation est courante pour les téléphones mobiles, les ordinateurs et les assistants personnels. Elle s'effectue par exemple selon une norme dite « SyncML » indépendante du moyen de transmission, ou selon des interfaces propriétaires (par exemple « HotSync » pour des assistants personnels sous système d'exploitation « PalmOS »), ou selon des interfaces liées au moyen de transmission (par exemple infrarouge ou sans-fil courte portée de type (« BlueTooth »).

Le document EP1372327 décrit un premier équipement de télécommunications (1), qui peut être un téléphone mobile ou fixe, et qui, suite à l'envoi d'une requête à un moyen de traitement, demande le transfert d'un répertoire. Il concerne aussi des moyens de gestion (2) contenant le répertoire demandé et qui, suite à la requête, transforme le répertoire demandé en une suite de messages SMS. Le transfert de répertoire sur un équipement s'effectue uniquement sur requête de demande de transfert en provenance de cet équipement. Le document WO02/071219 décrit un système pour la replication des données d'un téléphone mobile.

L'invention résulte de la constatation qu'il n'existe pas de moyen permettant la synchronisation des répertoires sur les téléphones fixes et que cette absence de moyen résulte du fait qu'une synchronisation nécessite des capacités de mémoire et des moyens de traitement qui ne sont, en général, pas prévus dans les téléphones fixes. En outre, le coût des terminaux de téléphonie fixe étant bas, l'ajout de moyens permettant la synchronisation risque d'augmenter le prix de ces terminaux d'une manière prohibitive.

Au surplus, les moyens de synchronisation existants, tels que la norme SyncML, exigent une bande passante et une puissance de traitement qui dépassent les capacités actuelles des téléphones fixes.

L'invention remédie à ces inconvénients.

Un terminal de téléphonie fixe conforme à l'invention est caractérisé en ce que, pour permettre la synchronisation de son répertoire avec les données en provenance d'un serveur, ledit terminal est du type comportant des moyens pour émettre et recevoir des messages SMS (« *Short Message Service* ») et comprend des moyens pour recevoir des messages SMS provenant du serveur contenant les données de synchronisation du répertoire et des moyens pour émettre vers le serveur des données relatives à son répertoire, ou à des modifications du répertoire, afin de permettre la synchronisation d'autres terminaux avec ce répertoire, ou la sauvegarde de ce répertoire.

L'utilisation de la voie SMS pour la synchronisation d'un téléphone fixe permet de minimiser la bande passante utilisée. En outre, la capacité de mémoire à utiliser est proche de celle déjà existante pour la réception et l'émission de messages SMS. Par rapport à un terminal de téléphonie fixe classique, le seul traitement supplémentaire est la transformation des messages SMS reçus dans le format du répertoire du terminal et, réciproquement, la transformation des données du répertoire en messages SMS à émettre. Mais, il s'agit-là de moyens de conversion qui peuvent être réalisés à bon marché. Par exemple, si le terminal comporte déjà un microprocesseur, ces moyens de traitement n'entraîneront pratiquement aucun surcoût.

Il pourra être nécessaire de prévoir une mémoire supplémentaire pour stocker le logiciel permettant la conversion de messages SMS en numéros pour le répertoire téléphonique et réciproquement. Mais, cette capacité supplémentaire est relativement faible.

De préférence, le serveur avec lequel le terminal de téléphonie fixe est en communication et qui peut être connecté à d'autres appareils pour la synchronisation, est compatible avec la norme SyncML.

Ainsi, l'invention concerne aussi, et de façon indépendante d'un terminal, un serveur qui comprend des entrées/sorties pour recevoir de, ou émettre vers des, terminaux de types ordinateur, assistant personnel ou téléphone mobile, des données de répertoires d'adresses, et au moins une entrée/ sortie destinée à émettre vers des terminaux de téléphonie fixe, des messages SMS de synchronisation des répertoire s et/ou pour recevoir de tels messages SMS représentant des données de synchronisation des répertoires provenant de terminaux de téléphonie fixe.

Dans un mode de réalisation, le serveur comporte des moyens pour sélectionner les données de répertoire à transmettre aux terminaux de téléphonie fixe parmi des données de carnets d'adresses complètes. De façon plus précise, dans un mode de réalisation, les répertoires contenus dans les terminaux de téléphonie fixe contiennent seulement un champ de nom et un champ de numéro de téléphone alors que les carnets d'adresses contenus dans la base de données du serveur contiennent un nombre plus important de champs tels que, outre le nom et le numéro de téléphone, le prénom, l'adresse postale, l'adresse email et d'autres caractéristiques de la personne concernée.

Ainsi l'invention concerne de façon générale un terminal de téléphonie fixe comportant un répertoire téléphonique et des moyens pour émettre et recevoir des messages SMS, qui est caractérisé en ce qu'il comporte :
des moyens pour convertir des données du répertoire téléphonique en messages SMS afin de les transmettre à un serveur, et/ou
des moyens pour recevoir du serveur des messages SMS représentant des données du répertoire, et des moyens pour convertir ces messages SMS reçus en des entrées du répertoire
caracteriseé en ce que le répertoire téléphonique est attaché à une sous-adresse SMS, chaque sous-adresse SMS étant accessible par l'intermédiaire d'un code d'accès.

Dans une réalisation le terminal, comporte des moyens pour adresser, par messages SMS, au serveur auquel il est connectable, les caractéristiques de son répertoire, à savoir : le nombre maximum d'entrées, le format des entrées et, de préférence, le nombre de répertoires.

Le terminal peut comporter des moyens pour requérir une synchronisation automatique ou une synchronisation à commande manuelle du répertoire.

Selon un mode de réalisation, le terminal comporte une mémoire des modifications apportées au répertoire et des moyens pour signaler la nécessité d'une synchronisation, ou pour déclencher automatiquement une synchronisation, lorsque le degré de remplissage de la mémoire dépasse un seuil prédéterminé, ou lorsqu'une période de temps prédéterminée depuis la dernière synchronisation a été dépassée.

Le terminal comporte, dans un exemple, un moyen pour recevoir d'un serveur auquel il est connecté, un signal indiquant qu'une synchronisation doit être effectuée.

Dans ce cas, un moyen peut être prévu pour que la synchronisation soit effectuée de façon automatique à réception du signal.

De préférence, le terminal comprend un moyen pour recevoir d'un serveur auquel il est connecté, des données de modification et des moyens pour mettre à jour le répertoire avec ces données de modification.

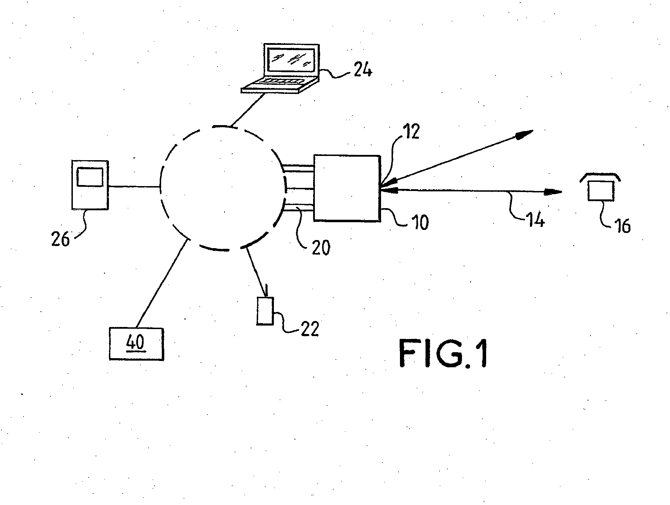

D'autres caractéristiques et avantages de l'invention apparaîtront avec la description de certains de ses modes de réalisation, celle-ci étant effectuée en se référant au dessin ci-annexé sur lequel la figure 1 représente un système selon l'invention.

Le système conforme à l'invention qui est représenté sur la figure 1 comprend un serveur 10 avec une entrée/sortie 12 destinée à être connectée par un réseau de téléphonie fixe 14 à des terminaux de téléphonie fixe 16 du type filaire ou sans fil. En pratique, le serveur 10 est connecté au réseau 14 par l'intermédiaire d'un serveur F-SMSC (Fixed SMS Center).

Par ailleurs, le serveur 10 est connectable au réseau Internet par l'intermédiaire par exemple d'une interface SyncML, de façon à recevoir, et diffuser, des données de répertoires téléphoniques ou carnets d'adresses. Ces données proviennent de, ou sont émises vers des, téléphones mobiles 22, ordinateurs 24 et assistants personnels 26 (PDA *« Personal Digital Assistant* »), éventuellement par l'intermédiaire d'autres serveurs de synchronisation.

Les téléphones 16 sont du type SMS, c'est-à-dire qu'ils peuvent émettre et recevoir des messages SMS. Chaque terminal téléphonique 16 comporte, pour l'émission et la réception de messages SMS, une sous-adresse de façon à pouvoir distinguer ce terminal d'un autre terminal relié à la même ligne, c'est-à-dire ayant le même numéro d'appel. A chaque terminal, on peut aussi affecter plusieurs sous-adresses correspondant à des utilisateurs différents. Dans ce cas à chaque sous-adresse est affecté un code d'entrée.

Le terminal 16 comporte un répertoire téléphonique, des moyens pour convertir les données de ce répertoire en messages SMS et des moyens pour émettre ce répertoire téléphonique par messages SMS vers le serveur 10. Il comporte aussi des moyens pour recevoir du serveur 10 des messages SMS représentant des données du répertoire et des moyens pour convertir ces messages SMS en entrées dans le répertoire.

Le terminal 16 comporte en outre un moyen pour s'enregistrer auprès d'un opérateur, ou fournisseur de services, afin de bénéficier du service de la synchronisation du répertoire téléphonique. L'enregistrement s'effectue en trois étapes, à savoir : une étape d'identification, une étape d'entrée de données et une étape de synchronisation initiale. Les deux premières étapes s'effectuent par communication ne faisant pas intervenir le terminal 16.

Au cours de l'étape d'identification, l'utilisateur adresse à un site Internet 40 de l'opérateur ou du fournisseur de services ses données d'identification, c'est-à-dire le numéro de téléphone de la ligne à laquelle est connecté le terminal 16 et la sous-adresse SMS du terminal 16. Cette opération s'effectue par l'accès direct, par exemple par l'intermédiaire d'un ordinateur ou d'un assistant personnel, au site Internet 40, lui-même relié au serveur 10.

En retour, le site 40 fournit à l'utilisateur un code d'accès.

La seconde étape, qui s'effectue également indépendamment du terminal 16, consiste à entrer des données de contact à l'aide d'un formulaire internet. Ces données de contact sont les divers champs que l'on trouve dans un carnet d'adresses, à savoir : le nom, le prénom, l'adresse postale, l'adresse email, le numéro de téléphone, le numéro de télécopie, etc. Ainsi, le serveur 40 contiendra des données de carnet d'adresses et sera capable de sélectionner, parmi ces données, celles qui pourront être chargées par des messages SMS vers les terminaux de téléphonie fixe.

Cette étape d'entrée de données comporte aussi la possibilité d'autoriser l'accès à des appareils identifiés tels que l'ordinateur ou l'assistant personnel ou le téléphone mobile du même utilisateur. Cette entrée de données peut aussi comporter l'attribution de catégories différentes de répertoires, par exemple un répertoire personnel et un répertoire professionnel.

La troisième étape est l'étape de synchronisation initiale. Elle consiste à transférer des données du serveur 10 vers le terminal 16. A cet effet l'utilisateur choisit le menu de synchronisation initiale sur le terminal. Ce dernier demande d'abord le code d'accès. Si la ligne téléphonique est libre, le terminal envoie alors automatiquement un message SMS au serveur 10 qui contient, d'une part, le numéro appelant, c'est-à-dire le numéro de téléphone du terminal 16 et la sous-adresse de boîte SMS, le code d'accès de l'utilisateur et les données caractéristiques du terminal 16. Ces données caractéristiques sont le nombre maximum d'entrées dans le répertoire, le format des entrées, c'est-à-dire le nombre de caractères dans le champ du nom (et éventuellement le champ d'autres données telles que l'adresse professionnelle ou du domicile) et le nombre de signes dans le champ du numéro, ainsi que le nombre de répertoires.

Si le code accès de l'utilisateur ne correspond pas à celui de la ligne du terminal et de la sous-adresse SMS, le serveur répond par un message SMS indiquant une erreur. Ce message d'erreur peut indiquer, par exemple, que le code d'accès ne correspond pas à celui de la ligne du téléphone 16 ou que la ligne n'est pas abonnée au service.

Si le code d'accès est correct, le serveur 10 effectue le formatage du répertoire du terminal 16 en se basant sur les caractéristiques de ce terminal et il transmet audit terminal le répertoire téléphonique sous la forme de messages SMS chaînés et vérifiés, par exemple par sommation. Comme indiqué ci-dessus, le formatage comprend, le cas échéant, la sélection des données à transmettre du serveur 10 vers le terminal 16. Dans un mode de réalisation, le serveur transmet seulement le champ du nom et le champ du numéro de téléphone vers les terminaux 16.

Quand le terminal a reçu les informations de façon correcte, il envoie, de façon automatique, un message de confirmation au serveur qui contient le nombre d'entrées reçues et le mode de synchronisation ultérieure désiré, à savoir, le mode automatique, le mode manuel ou le mode sans synchronisation. Par mode sans synchronisation, on entend que le répertoire téléchargé ne sera plus mis à jour.

La synchronisation initiale peut aussi consister à envoyer les données du répertoire du terminal vers le serveur. Dans ce cas, le terminal envoie ses caractéristiques en même temps que les données du répertoire.

La synchronisation ultérieure consiste en la transmission du serveur vers le terminal, ou du terminal vers le serveur, de données de modifications qui consistent en des additions, en des suppressions ou en des changements de données d' un répertoire.

Selon une réalisation, chaque modification apparaissant dans le serveur ou dans le terminal est transmise dès que possible à l'autre partie (terminal ou serveur) sous forme de message(s) SMS.

Dans une autre réalisation, les messages de synchronisation SMS ne sont transmis que lorsque l'ensemble des modifications effectuées atteint une taille déterminée afin de minimiser le coût et le temps de transmission. Par exemple, si la taille requise correspond à un nombre déterminé d'octets (typiquement le nombre d'octets maximal dans un message SMS), le terminal (ou le serveur) comporte des moyens pour compter le nombre d'octets des modifications et pour déclencher la connexion SMS une fois que la somme des modifications a atteint une taille déterminée. Ce couplage peut s'effectuer par la détection du remplissage d'une mémoire dans laquelle les modifications sont introduites.

Dans une autre réalisation, les messages de synchronisation SMS ne sont transmis que lorsqu'il s'est écoulé une durée prédéterminée depuis la dernière modification. Ceci permet de prendre en compte une série de modifications effectuées par l'utilisateur au cours d'une seule session.

Ces réalisations peuvent également être combinées pour déclencher l'envoi automatique des messages dès que l'un de ces critères (taille ou durée) a été satisfait.

Chaque message de synchronisation comporte le code d'accès de l'utilisateur et l'émetteur est identifié grâce à son numéro d'appel et sa sous-adresse SMS éventuelle.

La synchronisation peut également être effectuée de façon manuelle. Dans ce cas, chaque synchronisation n'est effectuée qu'à la requête de l'utilisateur. Par exemple, le terminal comporte des moyens pour déterminer les modifications apportées après chaque synchronisation et lorsque la capacité, ou taille, de ces modifications dépasse une valeur prédéterminée, un signal indique à l'utilisateur qu'il doit effectuer une synchronisation. Une modification supplémentaire n'est pas possible tant que la synchronisation n'a pas été effectuée, car la mémoire des modifications est saturée. L'utilisateur peut également demander une synchronisation manuelle, depuis le terminal, même si la mémoire des modifications n'est pas saturée.

La synchronisation manuelle du serveur vers le terminal peut être déclenchée à la demande de l'utilisateur, cette demande étant soumise via le site Internet 40.

La synchronisation forcée est une retransmission, identique à la synchronisation initiale, qui consiste à retransmettre, par exemple après un incident, les données du répertoire du terminal vers le serveur ou du serveur vers le terminal. Pour un terminal, un incident qui peut aboutir à la perte ou l'endommagement du répertoire est, par exemple, une coupure de courant, une erreur de l'utilisateur, ou un échec de la synchronisation automatique. Dans le cas du serveur, la perte ou l'endommagement du répertoire peut provenir soit d'une erreur de l'utilisateur, soit d'une erreur dans le serveur, soit d'un défaut de la synchronisation automatique.

Cette synchronisation forcée peut être déclenchée à partir du terminal ou à partir du serveur.

Le système selon l'invention permet de fournir des terminaux pratiquement au même coût que les terminaux usuels à capacité SMS, puisque ces terminaux ont seulement besoin d'une capacité supplémentaire de mémoire de l'ordre de quelques ko. Les moyens de traitement sont déjà disponibles dans les terminaux, puisque ceux-ci comportent, en général, un microcontrôleur.

Par ailleurs, le système selon l'invention ne nécessite pas de canal de communication spécifique puisque l'invention fait appel au protocole SMS pour ligne fixe qui est aujourd'hui normalisé par l'ETSI et disponible dans la plupart des réseaux de grands opérateurs européens et de certains opérateurs non-européens.

Ainsi, on obtient de façon simple et bon marché la possibilité de synchroniser les répertoires des terminaux téléphoniques de type fixe (avec ou sans fil) avec tous les types d'appareils notamment ceux compatibles avec la norme SyncML.

L'utilisation de terminaux de téléphonie fixe de type SMS permet, chez un même abonné, l'existence et la synchronisation séparée de plusieurs répertoires grâce aux adresses SMS distinctes. Cette existence d'adresses SMS distinctes permet aussi la confidentialité de chacune des adresses SMS.

De façon générale, on peut, grâce à l'invention, constituer le répertoire d'un téléphone fixe à partir d'un autre appareil ou terminal dans lequel il est plus aisé d'entrer des informations qu'avec un terminal téléphonique. L'autre terminal est, par exemple, un appareil à clavier comportant toutes les lettres de l'alphabet ou un assistant personnel sur lequel on peut écrire manuellement. On peut également synchroniser les répertoires des téléphones fixes et mobiles. Enfin, le serveur peut servir de sauvegarde au répertoire.

Il est à noter que la connexion, par l'intermédiaire de messages SMS, à un site Internet 40 permet un guidage de l'utilisateur du téléphone fixe sur son écran.

De préférence, le protocole de communication entre le serveur et les terminaux est tel qu'il comporte des codes correcteurs d'erreurs et des procédures de nouveaux essais en cas d'erreurs.

En variante, on prévoit une synchronisation unidirectionnelle du serveur 10 vers le téléphone 16, c'est-à-dire que l'invention est alors utilisée seulement pour saisir les informations de contact et leurs modifications de façon plus aisée qu'avec le téléphone. Dans ce cas, il suffit que les terminaux soient dotés de moyens de conversion de messages SMS reçus en données du répertoire, mais il n'est pas indispensable que les terminaux comportent des moyens de transformation des données du répertoire en messages SMS.

Dans une autre variante, la synchronisation est asymétrique, c'est-à-dire qu'elle s'effectue principalement du terminal 16 vers le serveur, lequel est utilisé comme moyen de sauvegarde du répertoire. En cas de perte des données dans le répertoire du terminal, la récupération s'effectue par synchronisation forcée du serveur vers le terminal.

## Revendications

1. Terminal de téléphonie fixe (16) comportant un répertoire téléphonique et des moyens pour émettre et recevoir des messages SMS,comportant:
des moyens pour convertir des données du répertoire téléphonique en messages SMS afin de les transmettre à un serveur (10), et/ou
des moyens pour recevoir du serveur des messages SMS représentant des données du répertoire, et des moyens pour convertir ces messages SMS reçus en des entrées du répertoire, et
des moyens pour requérir une synchronisation, le répertoire téléphonique étant attaché à une sous-adresse SMS, chaque sous-adresse SMS étant accessible par l'intermédiaire d'un code d'accès.

2. Terminal selon la revendications 1 comportant des moyens pour adresser, par messages SMS, au serveur auquel il est connectable, les caractéristiques de son répertoire, à savoir : le nombre maximum d'entrées, le format des entrées et, de préférence, le nombre de répertoires.

3. Terminal selon l'une des revendications précédentes, les moyens pour requérir une synchronisation permettant une synchronisation automatique ou une synchronisation à commande manuelle du répertoire.

4. Terminal selon l'une des revendications précédentes, comportant une mémoire des modifications apportées au répertoire et des moyens pour signaler la nécessité d'une synchronisation, ou pour déclencher automatiquement une synchronisation, lorsque le degré de remplissage de la mémoire dépasse un seuil prédéterminé, ou lorsqu'une période de temps prédéterminée depuis la dernière synchronisation a été dépassée.

5. Terminal selon l'une des revendications précédentes, comportant un moyen pour recevoir d'un serveur auquel il est connecté, un signal indiquant qu'une synchronisation doit être effectuée.

6. Terminal selon la revendication 5, comportant un moyen pour que la synchronisation soit effectuée de façon automatique à réception du signal.

7. Terminal selon l'une des revendications précédentes, comprenant un moyen pour recevoir d'un serveur auquel il est connecté, des données de modification et des moyens pour mettre à jour le répertoire avec ces données de modification.

## Patentansprüche

1. Festnetz-Telefonendgerät (16) mit einem Telefonverzeichnis und Mitteln zum Senden und Empfangen von SMS-Nachrichten, umfassend:
Mittel, um Daten des Telefonverzeichnisses in SMS-Nachrichten umzuwandeln, um sie an einen Server (10) zu übertragen, und/oder
Mittel, um von dem Server SMS-Machrichten zu empfangen, die Verzeichnisdaten darstellen, und Mittel, um diese empfangenen SMS-Nachrichten in Verzeichniseinträge umzuwandeln, und
Mittel, um eine Synchronisation anzufordern, wobei das Telefonverzeichnis einer SMS-Subadresse zugeordnet ist, wobei jede SMS-Subadresse über einen Zugangscode zugänglich ist.

2. Endgerät nach Anspruch 1, umfassend Mittel, um die Merkmale seines Verzeichnisses über SMS-Nachrichten an den Server zu adressieren, mit dem es verbunden werden kann, und zwar die maximale Anzahl der Einträge, das Format der Einträge und vorzugsweise die Anzahl der Verzeichnisse.

3. Endgerät nach einem der vorhergehenden Ansprüche, wobei die Mittel zum Anfordern einer Synchronisation eine automatische Synchronisation oder eine manuell gesteuerte Synchronisation des Verzeichnisses ermöglichen.

4. Endgerät nach einem der vorhergehenden Ansprüche, umfassend einen Speicher für die Änderungen des Verzeichnisses und Mittel, um die Notwendigkeit einer Synchronisation zu melden bzw. um eine Synchronisation automatisch auszulösen, wenn der Füllgrad des Speichers eine vorbestimmte Schwelle überschreitet oder wenn seit der letzten Synchronisation ein vorbestimmter Zeitraum überschritten wurde.

5. Endgerät nach einem der vorhergehenden Ansprüche, umfassend ein Mittel, um von einem Server, mit dem es verbunden ist, ein Signal zu empfangen, welches anzeigt, dass eine Synchronisation durchzuführen ist.

6. Endgerät nach Anspruch 5, umfassend ein Mittel, damit die Synchronisation automatisch bei Signalempfang durchgeführt wird.

7. Endgerät nach einem der vorhergehenden Ansprüche, umfassend ein Mittel, um von einem Server, mit dem es verbunden ist, Änderungsdaten zu empfangen, und Mittel, um das Verzeichnis mit diesen Änderungsdaten zu aktualisieren.

## Claims

1. Fixed telephony terminal (16) comprising a telephone directory and means for transmitting and receiving SMS messages, comprising:
means for converting data from the telephone directory into SMS messages in order to transmit them to a server (10), and/or
means for receiving from the server SMS messages representing data from the directory, and means for converting these received SMS messages into entries in the directory,
and
means for requesting a synchronisation, the telephone directory being attached to an SMS subaddress, each SMS subaddress being accessible via the intermediary of an access code.

2. Terminal according to claim 1 comprising means for addressing, by SMS messages, to the server to which it can be connected, the characteristics of its directory, namely: the maximum number of entries, the format of the entries and, preferably, the number of directories.

3. Terminal according to one of the preceding claims, the means for requesting a synchronisation enabling an automatic synchronisation or a manually-controlled synchronisation of the directory.

4. Terminal according to one of the preceding claims, comprising a memory of modifications made to the directory and means for providing notification of the need for a synchronisation, or for automatically initiating a synchronisation, when the degree of fullness of the memory exceeds a predetermined threshold, or when a predetermined period of time since the last synchronisation has been exceeded.

5. Terminal according one of the preceding claims, comprising a means for receiving from a server to which it is connected, a signal indicating that a synchronisation must be carried out.

6. Terminal according to claim 5, comprising a means so that the synchronisation is carried out automatically when the signal is received.

7. Terminal according to one of the preceding claims, comprising a means for receiving modification data from a server to which it is connected and means for updating the directory with these modification data.
